# EUROPÄISCHE PATENTSCHRIFT

(11) **EP 0 550 534 B1**
(45) Veröffentlichungstag und Bekanntmachung des Hinweises auf die Patenterteilung: **04.06.1997**
(21) Anmeldenummer: 91916867.4
(22) Anmeldetag: 24.09.1991
(51) Int. Cl.: B01D 1/26

(54) **VERFAHREN ZUR RÜCKGEWINNUNG VON ETHYLENGLYCOL BEI DER ENTSORGUNG VON GLYCOLHALTIGEN BETRIEBSFLÜSSIGKEITEN**
PROCESS FOR RECOVERING ETHYLENE GLYCOL DURING THE DISPOSAL OF INDUSTRIAL LIQUID WASTES CONTAINING GLYCOL
PROCEDE DE RECUPERATION D'ETHYLENE GLYCOL LORS DE L'ELIMINATION DE LIQUIDES INDUSTRIELS USAGES CONTENANT DU GLYCOL

(30) Priorität: 25.09.1990 DE 4030331
(43) Veröffentlichungstag der Anmeldung: 14.07.1993
(73) Patentinhaber: BEISTER, Heinz, J., D-71229 Leonberg (DE)
(72) Erfinder: BEISTER, Heinz, J., D-7250 Leonberg 7 (DE); BÜRK, Peter, D-7250 Leonberg (DE); BAUER, Wilfried, D-7000 Stuttgart (DE)
(74) Vertreter: Dost, Wolfgang, Dr.rer.nat., Dipl.-Chem.
(86) Internationale Anmeldenummer: EP9101819
(87) Internationale Veröffentlichungsnummer: WO9204956

(56) Entgegenhaltungen:
- FR-A- 2 489 305
- PATENT ABSTRACTS OF JAPAN vol. 6, no. 165 (C-121)(1043) 28. August 1982 & JP,A, 57 080 335 ( MITSUBISHI YUKA K.K. ) 19. Mai 1982 siehe Zusammenfassung

## Beschreibung

Die Erfindung betrifft ein Verfahren zur Rückgewinnung von Ethylenglykol bei der Entsorgung von glykolhaltigen Betriebsflüssigkeiten, insbesondere Altkühlwasser.

Als Grundlage von Betriebsflüssigkeiten für Heiz- und Kühlsysteme finden Glykole eine breite Anwendung in der Technik, vor allem als Gefrierschutzmittel (Ullmanns Encyclopädie der Chemie, 4. Auflage, Band 12: Gefrierschutzmittel, Verlag Chemie Weinheim (1976)). Als Gefrierschutzmittel-Hauptkomponente kommen hier in Frage Ethylenglykol, 1,2-Propylenglykol und Diethylenglykol und deren Mischungen. Der Einfachkeit halber wird jedoch nachfolgend das Verfahren beispielhaft anhand von Ethylenglykol erläutert.

Ethylenglykol (Ethandiol, HOCH₂CH₂OH) ist ein großtechnisches Produkt, das aus Ethylenoxid durch Umsetzung mit Wasser gewonnen wird. Ethylenglykol findet eine breite Anwendung in der Technik (Zur Sicherheit Antifrogen - der Vollschutz für Heiz- und Kühlsysteme; Hoechst AG Frankfurt am Main 1989)), vor allem für die Kühlung von Verbrennungsmotoren (Glysantin, Technische Information; BASF Ludwigshafen (1989)). Dort übernimmt es im Gemisch mit Wasser eine Reihe von Schutzfunktionen, unter anderem die Aufgabe des Frostschutzes (Verhinderung der Kühlersprengung) und (bei Motoren) die Unterdrückung der Kavitation (Glysantin, Technische Information; BASF Ludwigshafen (1989)). Da Ethylenglykol-Wasser-Gemische bei höheren Betriebstemperaturen korrosiv wirken können, werden diesen Gemischen geringe Mengen (ca. 1-5%) weiterer Zusatzstoffe zugegeben. Im einzelnen sind dies Inhibitoren, Antioxidantien, eine Alkalireserve und Schmierstoffe. Über die hier verwendeten Zusätze gibt es eine größere Zahl von Patentschriften (Ullmanns Encyclopädie der Chemie, 4. Auflage, Band 12: Gefrierschutzmittel, Verlag Chemie Weinheim (1976)). Nach Gebrauch fällt die Kühlflüssigkeit als Abfallstoff (im folgenden Altkühlwasser genannt) an. Je nach dem Verlauf der Betriebsphase ist das Altkühlwasser mit Verunreinigungen versehen: Zersetzungsprodukte aus dem langwährenden Betrieb, Schwermetallspuren aus der Korrosion (vor allem auch bei der Verwendung von Kühlflüssigkeit minderer Qualität) und Ölspuren aus Motordefekten mit allen darin enthaltenen Verunreinigungen. Das Altkühlwasser fällt in den Werkstätten in großer Menge (in der Bundesrepublik pro Jahr etwa 100.000 Tonnen) als Gemisch verschiedener Fabrikate und Konzentrationen an. Wegen der Verunreinigungen und der großen Abfallmenge darf Altkühlwasser von den Werkstätten nicht in die Kanalisation (d. h. nicht in kommunale Kläranlagen) eingeleitet werden, sondern muß ordnungsgemäß als Sonderabfall entsorgt werden.

Bei bekannten Verfahren zur Ethylenglykolentsorgung gibt es zwei Möglichkeiten. Zum einen wird Altkühlwasser zum größten Teil in Sondermüllverbrennungsanlagen entsorgt. Zum anderen kann die Einleitung in speziell adaptierte Industriekläranlagen erfolgen, wenn das Altkühlwasser nicht mit Öl oder Schwermetallen verunreinigt ist. Dies ist jedoch in der Regel nicht der Fall und selbst wenn dies der Fall wäre, wäre eine solche speziell angepasste Industriekläranlage wegen der entsprechenden Auslegung aufwendig und teuer. Die Verbrennung als Sondermüll wird vom Gesetzgeber zur Zeit als einzige verfügbare Entsorgungsmöglichkeit angesehen (Technische Anleitung (TA) Sonderabfall (1989), Der Bundesminister für Umwelt, Naturschutz und Reaktorsicherheit), andererseits empfehlen auch die Hersteller von Ethylenglykol den Weg der Verbrennung (Zur Sicherheit Antifrogen - Der Vollschutz für Heiz- und Kühlsysteme; Hoechst AG Frankfurt am Main (1989); Glysantin, Technische Information; BASF Ludwigshafen (1988); Glykorol, Technische Information, Hoechst AG Frankfurt am Main (1988)). Wegen der zunehmend hohen Investitionskosten der Sondermüllverbrennungsanlagen ist die Verbrennung jedoch wenig interessant, da einerseits das Gefährdungspotential von Altkühlwasser klein ist (verglichen mit vielen anderen umweltgefährdenden Stoffen) und andererseits bei hohem Wasseranteil noch Energie zum Verbrennen aufgebracht werden muß. Die zur Zeit vorhandenen knappen Verbrennungskapazitäten sollten daher nicht mit Altkühlwasser belastet werden.

FR-A-2 489 305 und Patent Abstracts of Japan, Band 6, Nummer 165 (C-121) (1043) betreffen jeweils ein Verfahren zum Aufkonzentrieren wäßriger bzw. verdünnter Glykollösungen über mehrere Verdampfungsstufen. Diese wäßrigen bzw. verdünnten Glykollösungen enthalten im Gegensatz zu entsorgenden glykolhaltigen Betriebsflüssigkeiten keine Nicht- und Schwersieder.

Der Erfindung liegt die Aufgabe zugrunde, die Rückgewinnung von Ethylenglykol bei der Entsorgung von glykolhaltigen Betriebsflüssigkeiten mit möglichst geringem Aufwand an Energie bei möglichst geringem Platzbedarf, d. h. ohne speziell adaptierte Industriekläranlage, durchzuführen.

Diese Aufgabe wird erfindungsgemäß durch das Verfahren gemäß Anspruch 1 gelöst.

Das Verfahren nach Anspruch 1 zeichnet sich in erster Linie dadurch aus, daß man mittels einer Dünnschichtverdampfung in einer ersten Verdampfungsstufe zunächst die Hauptmenge des Wassers abtrennt. Nach der ersten Verdampfungsstufe kann das dort abgetrennte Wasser in die Kanalisation abgeführt bzw. in den Kühlmittelkreislauf zurückgeführt werden. Dann führt man das Sumpfprodukt der ersten Verdampfungsstufe einer zweiten Verdampfungsstufe zu, wobei das Restwasser destillativ abgetrennt wird. Anschließend wird in einer weiteren Verdampfungsstufe mittels einer Dünnschichtverdampfung die Hauptmenge des Ethylenglykols abgetrennt, das für eine weitere Verwendung geeignet ist. Zu entsorgen ist nur das in der weiteren Verdampfungsstufe anfallende Sumpfprodukt, das die Nicht- bzw. Schwersieder enthält und das als Sondermüll, z. B. durch Verbrennen zu entsorgen ist.

Das Verfahren ist in weiterer Ausbildung so angelegt, daß die verschiedenen Verfahrensstufen sowohl diskontinuierlich als auch kontinuierlich durchgeführt werden können. Dadurch wird ein hohes Maß an Betriebssicherheit erreicht. Schwankungen in Qualität und Konzentration des Ausgangsproduktes (Altkühlwasser) wirken nicht auf alle Stufen gleichzeitig, da diese durch zwischengeschaltete Sammeltanks entkoppelt sind. Das Verfahren gestattet die Aufarbeitung von 40 Tonnen Altkühlwasser pro Tag.

Der Anteil des als Sondermüll zu entsorgenden Sumpfproduktes im Vergleich zur Anfangsmenge des zu entsorgenden Altkühlwassers, beträgt nur noch etwa 5 %. Damit sind die Kosten für die Reststoffentsorgung äußerst gering. Für die Verbrennung ist keine zusätzliche Energie aufzuwenden, weil durch die Verbrennung des aufkonzentrierten organischen Anteils Energie freigesetzt wird, und es sind auch keine platzbeanspruchenden speziellen Kläranlagen erforderlich. Durch die Auftrennung des Abfalls wird die Entgiftung, die Verminderung der Abfallmenge, eine Schonung der Ressourcen durch teilweise Wiederverwendung und die effektivere Nutzung, d. h. nur die umweltgefährdenden Stoffe werden als Konzentrat verbrannt, der bisherigen Entsorgungsverfahren erreicht.

Nachfolgend wird die Erfindung anhand von in der Zeichnung dargestellten Ausführungsbeispielen näher erläutert.

Figur 1 zeigt schematisch eine Vorrichtung zur Durchführung eines nicht beanspruchten Verfahrens, bei dem gegenüber dem beanspruchten Verfahren eine zweite Verdampfungsstufe fehlt.

Figuren 2 bis 4 zeigen erfindungsgemäße Beispiele.

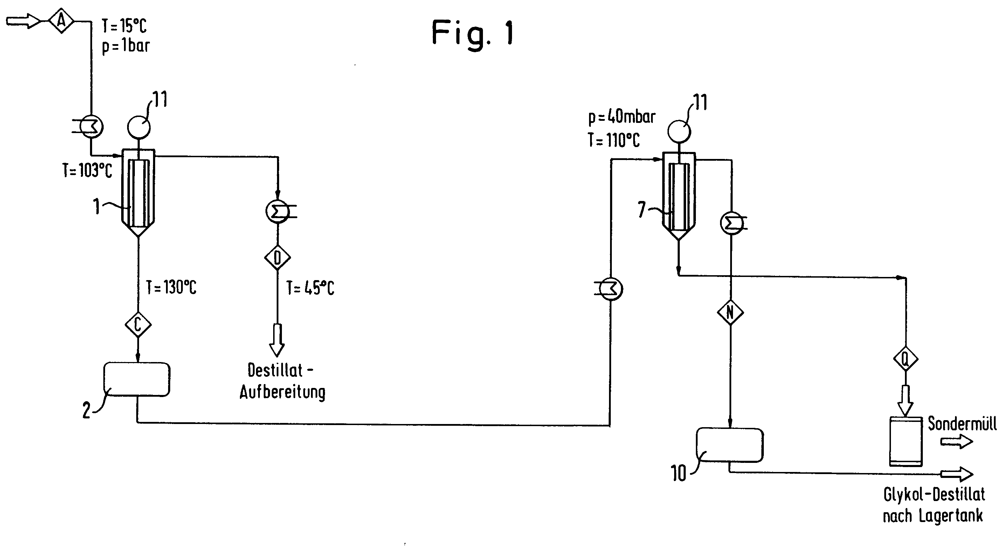

Beim Verfahren von Fig. 1 wird aus dem ggf. filtrierten und von an der Oberfläche abgeschiedenem Öl befreiten Altkühlwasser A, z. B bestehend aus etwa 57 % Wasser, 38 % Ethylenglykol und 5 % Nicht- bzw. Schwersiedern, zunächst durch eine erste Verdampfungsstufe, die aus einem Dünnschichtverdampfer 1 besteht, die Hauptmenge des Wassers unter Atmosphärendruck destillativ abgetrennt. Das Destillat D besteht aus Wasser mit ca. 4% Ethylenglykol und wird vor der Abgabe in die Kanalisation belüftet und durch Zugabe von Kalk aufgehärtet. Das Sumpfprodukt C enthält etwa 86% Ethylenglykol, 11% Schwersieder und 3% Restwasser. Anschließend wird in einer weiteren Verdampfungsstufe, die aus einem Dünnschichtverdampfer 7 besteht, bei etwa 40 mbar aus dem Sumpfprodukt C der vorhergehenden Verdampfungsstufe das Ethylenglykol destillativ abgetrennt und dem Lagertank 10 zugeführt. Das Destillat N besteht aus technisch reinem Ethylenglykol mit etwa 5% Wasser und wird wiederverwendet. Das Sumpfprodukt Q besteht zu mindestens 55 % aus Schwersiedern und Salzen und wird als Sondermüll entsorgt. Der Restethylenglykolgehalt in diesem Sumpfprodukt ist maximal 45 %.

Durch einen in den Dünnschichtverdampfern 1 und 7 laufenden Wischer oder Kratzer (Motorantrieb 11 eingezeichnet) wird verhindert, daß es auf heißen Flächen zum Trocknen und Anbacken von Feststoffen kommt.

In einer Ausführungsform des Verfahrens von Fig. 1 wird das Sumpfprodukt C der ersten Verdampfungstufe in einem Sammeltank 2, der mit dem Bodenteil des ersten Dünnschichtverdampfers 1 verbunden ist, zunächst gesammelt. Dadurch werden Schwankungen in der Konzentration der Inhaltsstoffe und der Menge des anfallenden Altkühlwassers ausgeglichen, was auch einen diskontinuierlichen Betrieb ermöglicht. Der Vorratstank hat ein Fassungsvermögen von 30 m³ und kann das während eines Tages anfallende Sumpfprodukt C aufnehmen.

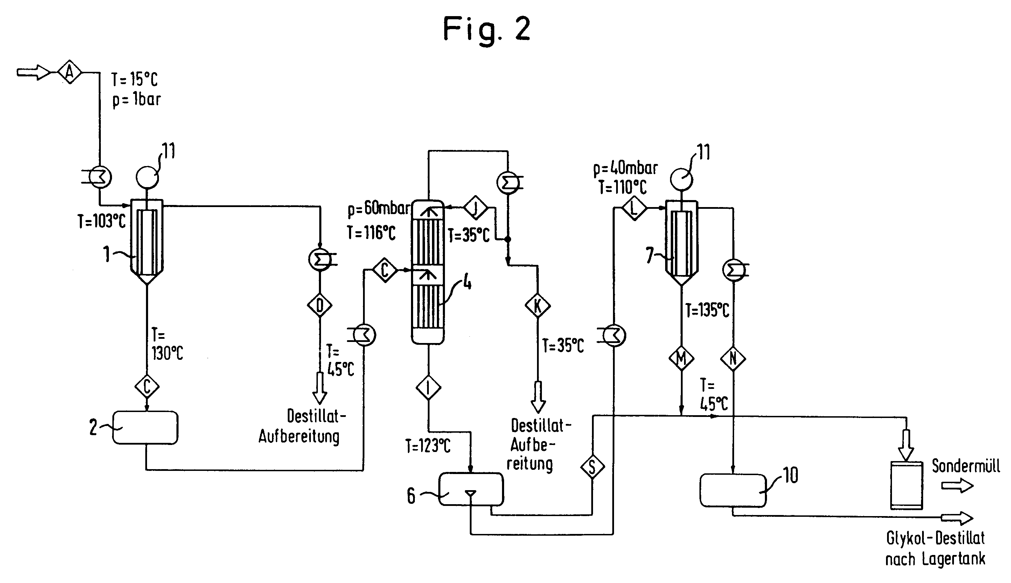

Fig. 2 weist gegenüber Fig. 1 eine zusätzliche Verdampfungsstufe auf. In dieser Ausführungsform der Erfindung wird aus dem gesammelten Sumpfprodukt C der ersten Verdampfungsstufe mittels einer zwischen die beiden Verdampfungsstufen geschalteten, zweiten Verdampfungsstufe, die als Kolonne 4 mit Abtriebs- und Verstärkerteil ausgebildet ist, das darin enthaltene Restwasser bei 60 mbar destillativ abgetrennt. Das Rektifikat K (Wasser) wird wie bereits oben beschrieben, aufbereitet und an die Kanalisation abgegeben. Ein Teil J kann aber auch zurückgeführt werden, um durch Verrieseln verdampfendes Ethylenglykol auszuwaschen. Das Sumpfprodukt I der zweiten Verdampfungstufe wird zunächst in einem Absetztank 6 gesammelt, der eine Entnahmeöffnung am Boden für das Sediment S und eine weitere Entnahmeöffnung im Abstand darüber, durch die die klare Phase L dem Dünnschichtverdampfer 7 zugeführt wird, aufweist. Nach dem Absetzen wird das Sediment S zusammen mit dem Sumpfprodukt M der weiteren Verdampfungsstufe als Sondermüll behandelt. Das Destillat N aus dem Dünnschichtverdampfer 7 besteht zu etwa 99 % aus Ethylenglykol mit einem Restanteil Wasser.

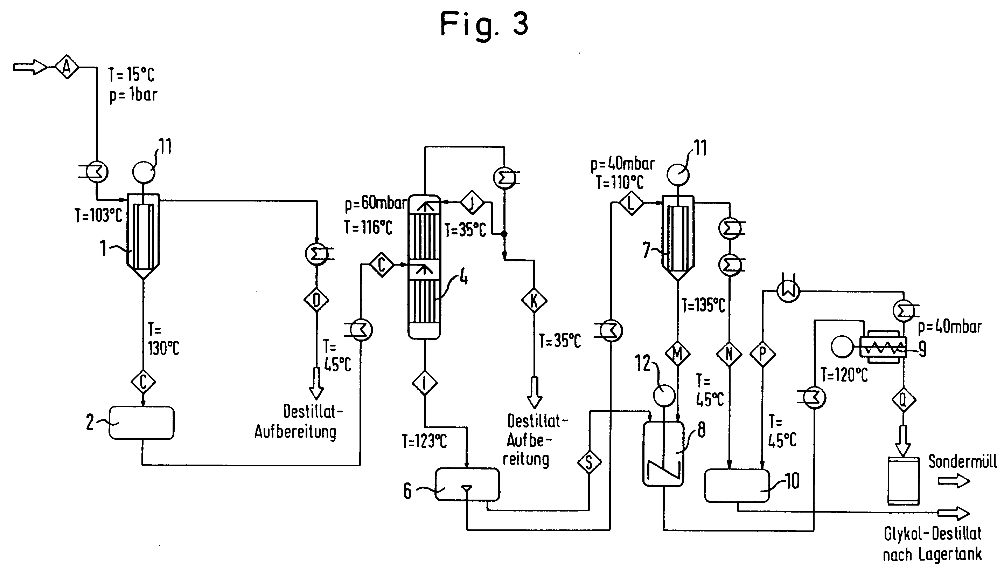

Fig. 3 weist gegenüber Fig. 2 zusätzlich noch einen Sammeltank 8 mit Rührwerk 12, der über die Entnahmeöffnung am Bodenteil mit dem Absetztank 6 und auch mit dem Bodenteil des zweiten Dünnschichtverdampfers 7 verbunden ist, und einen vierten Verdampfer 9 auf, der als Schneckenverdampfer ausgebildet ist. In dem Sammeltank 8 wird das Sediment S aus dem Absetztank 6 und das auf nur etwa 7 % - 20 % des eingesetzten Eingangsmaterials L eingeengte Sumpfprodukt M der weiteren Verdampfungsstufe zunächst gesammelt und dann dem Schneckenverdampfer 9 zugeführt und vorzugsweise bei 40 mbar verdampft. Das Destillat P des Schneckenverdampfers 9 besteht aus reinem Ethylenglykol und wird dem Lagertank 10 zugeführt und das Sumpfprodukt Q, eine Paste, die zu etwa 96 % aus Schwersiedern mit Restethylenglykol besteht, wird als Sondermüll entsorgt.

Durch dieses Resteindampfen wird der Sondermüllanteil auf etwa 60 % verringert. Dies hat eine erhebliche Einsparung an Reststoffentsorgungskosten zur Folge.

Aus der klaren konzentrierten Phase L des Absetztanks 6 wird wie oben beschrieben das Ethylenglykol destillativ abgetrennt. Das Destillat N besteht aus 99 % reinem Ethylenglykol mit Spuren von Restwasser.

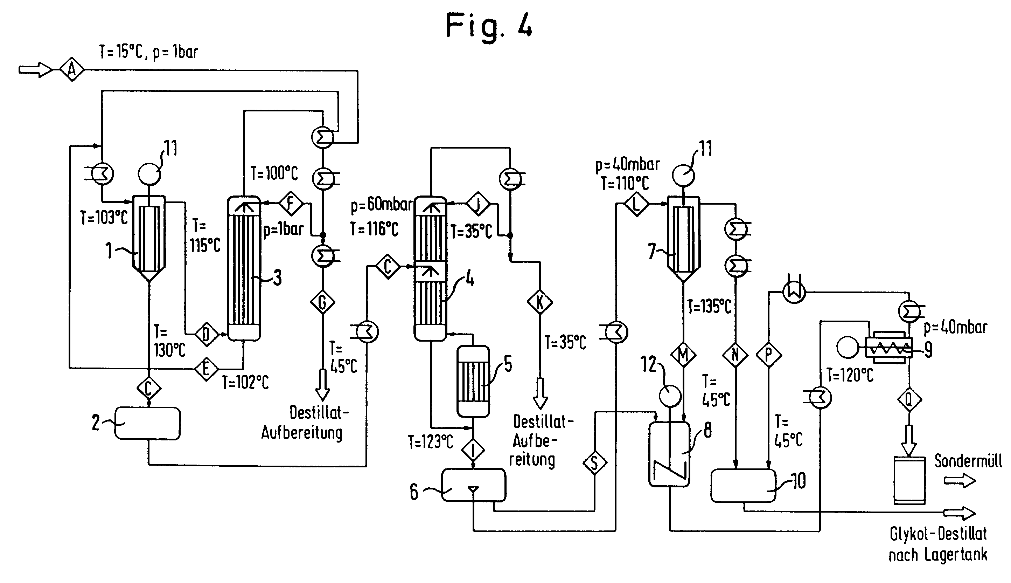

Fig. 4 weist gegenüber Fig. 3 zusätzlich noch eine Verstärkungskolonne 3 auf. Das Destillat D der ersten Verdampfungsstufe wird damit vor der Aufbereitung zur Abgabe in die Kanalisation zusätzlich noch rektifiziert, wobei der Ethylenglykolgehalt im Destillat G unter 1% sinkt. Ein Teil F des Destillats kann aber auch zurückgeführt werden, um durch Verrieseln verdampfendes Ethylenglykol auszuwaschen. Der bei der Rektifikation anfallende Sumpfprodukt E enthält etwa 70% Wasser und 30% Ethylenglykol und wird in die erste Verdampfungsstufe rückgeführt. Darüber hinaus kann die Beheizung der Kolonne 4 direkt im Kolonnensumpf oder extern mit einem Umlaufverdampfer 5 erfolgen. Die Dampfbelastung der Verstärkungskolonne 3 wird konstant gehalten, indem die Altkühlwasserzufuhr am Dünnschichtverdampfer 1 variiert wird.

Durch die Rektifikation wird wesentlich weniger Ethylenglykol mit dem abgetrennten Wasser an die Umwelt abgegeben.

## Patentansprüche

1. Verfahren zur Rückgewinnung von Ethylenglykol bei der Entsorgung von glykolhaltigen Betriebsflüssigkeiten, die Ethylenglykol, Wasser sowie Nicht- und Schwersieder enthalten, durch mehrstufige Destillation zur Abtrennung von Wasser und Ethylenglykol, **dadurch gekennzeichnet**, daß man
- die Betriebsflüssigkeit in einer ersten Verdampfungsstufe unter Atmosphärendruck einer Dünnschichtverdampfung zur destillativen Abtrennung des Hauptteils des Wassers unter Erhalt eines Sumpfprodukts unterwirft,
- das Sumpfprodukt der ersten Verdampfungsstufe einer zweiten Verdampfungsstufe zuführt, wobei das Restwasser bei 60 mbar destillativ abgetrennt wird,
- und das Sumpfprodukt in einer weiteren Verdampfungsstufe zur destillativen Abtrennung des Ethylenglykols einer Dünnschichtverdampfung bei 40 mbar zur Erzielung eines Sumpfprodukts mit bis zu 45 % Ethylenglykolgehalt unterwirft, wobei durch Wischen oder Kratzen ein Anbacken auf heißen Flächen verhindert wird.

2. Verfahren nach Anspruch 1, dadurch gekennzeichnet, daß man eine Betriebsflüssigkeit mit Alkalireserve verwendet.

3. Verfahren nach Anspruch 1 oder 2, dadurch gekennzeichnet, daß ein Anbacken auf heißen Flächen in der ersten Verdampfungsstufe durch Wischen oder Kratzen verhindert wird.

4. Verfahren nach einem der vorhergehenden Ansprüche, dadurch gekennzeichnet, daß man einen Teil des in der zweiten Verdampfungsstufe aufgefangenen Destillats in die zweite Verdampfungsstufe zurückführt, um durch Verrieselung verdampfendes Ethylenglykol auszuwaschen.

5. Verfahren nach einem der vorhergehenden Ansprüche, dadurch gekennzeichnet, daß man den absetzbaren Teil des Sumpfprodukts der zweiten Verdampfungsstufe zusammen mit dem Sumpfprodukt der weiteren Verdampfungsstufe sammelt und das gesammelte Sumpfprodukt einer vierten Verdampfungsstufe zuführt, um das Restethylenglykol destillativ abzutrennen.

6. Verfahren nach Anspruch 5, dadurch gekennzeichnet, daß man die Verdampfung in der vierten Verdampfungsstufe bei 40 mbar durchführt.

7. Verfahren nach einem der vorhergehenden Ansprüche, dadurch gekennzeichnet, daß man das Destillat der ersten Verdampfungsstufe zur Abtrennung des Restethylenglykols einer Rektifikationsstufe zuführt.

8. Verfahren nach Anspruch 7, dadurch gekennzeichnet, daß man das Sumpfprodukt der Rektifikationsstufe in die erste Verdampfungsstufe zurückführt.

9. Verfahren nach Anpruch 7 oder 8, dadurch gekennzeichnet, daß man einen Teil des Destillats der Rektifikationsstufe in diese zurückfuhrt, um durch Verrieselung des Destillats verdampfendes Ethylenglykol auszuwaschen.

## Claims

1. A process for recovery of ethylene glycol when disposing of glycol-containing used working liquids which contain ethylene glycol, water as well as non-boiling and high-boiling material by multistage distillation for separation of water and ethylene glycol,
**characterized in that**
- in a first evaporation stage at atmospheric pressure the used working liquid is subjected to thin-film evaporation for distilling off the major portion of the water thereby obtaining bottoms,
- the bottoms remaining from the first evaporation stage are supplied to a second evaporation stage, wherein residual water is distilled off at 60 mbar,
- and in a further evaporation stage the bottoms are subjected to thin-film evaporation at 40 mbar for distilling off ethylene glycol thereby obtaining bottoms containing up to 45% ethylene glycol, wherein caking on hot surfaces is prevented by wiping or scraping.

2. The process of claim 1, characterized in that the working liquid used contains an alkali reserve.

3. The process of claim 1 or 2, characterized in that caking on hot surfaces in the first evaporation stage is prevented by wiping or scraping.

4. The process of any of the preceding claims, characterized in that a portion of the distillate collected in the second evaporation stage is recirculated into the second evaporation stage to rinse evaporating ethylene glycol by irrigation.

5. The process of any of the preceding claims, characterized in that the precipitating portion of the bottoms from the second evaporation stage is collected together with the bottoms from the further evaporation stage and the collected bottoms are supplied to a fourth evaporation stage to separate residual ethylene glycol by distillation.

6. The process of claim 5, characterized in that evaporation in the fourth evaporation stage is carried out at 40 mbar.

7. The process of any of the preceding claims, characterized in that the distillate of the first evaporation stage is supplied to a rectifying stage for separating the residual ethylene glycol.

8. The process of claim 7, characterized in that the bottoms from the rectification stage are recirculated to the first evaporation stage.

9. The process of claim 7 or 8, characterized in that a portion of the distillate from the rectification stage is recirculated to said stage to rinse evaporating ethylene glycol by irrigation of the distillate.

## Revendications

1. Procédé de récupération d'éthylène-glycol lors du rejet de liquides de travail contenant du glycol et contenant de l'éthylène-glycol, de l'eau ainsi que des produits non ou difficilement bouillants, par une distillation à plusieurs étapes pour la séparation de l'eau et de l'éthylène-glycol,
caractérisé en ce que
- on soumet le liquide de travail dans une première étape d'évaporation à une évaporation de couche mince sous pression atmosphérique pour la séparation par voie de distillation de la partie principale de l'eau en obtenant un résidu de distillation,
- on amène le résidu de distillation de la première étape d'évaporation à une deuxième étape d'évaporation en séparant l'eau restante par voie de distillation à 60 mbar,
- et on soumet le résidu de distillation dans une étape d'évaporation supplémentaire pour la séparation par voie de distillation de l'éthylène-glycol à une évaporation de couche mince à 40 mbar pour obtenir un résidu de distillation ayant une teneur en éthylène-glycol allant jusqu'à 45 % en empêchant l'adhésion sur des surfaces chaudes par frottage ou grattage.

2. Procédé selon la revendication 1 caractérisé en ce qu'on utilise un liquide de travail avec une réserve d'une base.

3. Procédé selon la revendication 1 ou 2 caractérisé en ce qu'on empêche par frottage ou grattage l'adhésion sur des surfaces chaudes dans la première étape d'évaporation.

4. Procédé selon l'une des revendications précédentes caractérisé en ce qu'on ramène à la deuxième étape d'évaporation une partie du distillat recueilli dans la deuxième étape d'évaporation pour enlever par dispersion de l'éthylène-glycol qui s'évapore.

5. Procédé selon l'une des revendications précédentes caractérisé en ce qu'on recueille la partie décantable du résidu de distillation dans la deuxième étape d'évaporation avec le résidu de distillation de l'étape d'évaporation supplémentaire et qu'on amène le résidu de distillation recueilli vers une quatrième étape d'évaporation afin de séparer l'éthylène-glycol restant par voie de distillation.

6. Procédé selon la revendication 5 caractérisé en ce qu'on exécute à 40 mbar l'évaporation dans la quatrième étape d'évaporation.

7. Procédé selon l'une des revendications précédentes caractérisé en ce qu'on ramène le distillat de la première étape d'évaporation à une étape de rectification afin de séparer l'éthylène-glycol restant.

8. Procédé selon la revendication 7 caractérisé en ce qu'on ramène le résidu de distillation de l'étape de rectification vers la première étape d'évaporation.

9. Procédé selon la revendication 7 ou 8 caractérisé en ce qu'on ramène une partie du distillat de l'étape de rectification retour dans celle-ci afin d'enlever par dispersion l'éthylène-glycol qui s'évapore.
